# EUROPÄISCHE PATENTSCHRIFT

(11) **EP 3 690 370 B1**
(45) Veröffentlichungstag und Bekanntmachung des Hinweises auf die Patenterteilung: **28.07.2021**
(21) Anmeldenummer: 19213572.1
(22) Anmeldetag: 04.12.2019
(51) Int. Cl.: F27D 3/16, C21C 5/46, C21C 5/52, F16K 17/38, F16K 37/00, F27D 21/04, F27D 21/00

(54) **ANZEIGEVORRICHTUNG FÜR GEFAHRENSITUATIONEN**
DISPLAY DEVICE FOR HAZARDOUS SITUATIONS
DISPOSITIF D'AFFICHAGE POUR SITUATIONS DANGEREUSES

(30) Priorität: 31.01.2019 DE 102019102486
(43) Veröffentlichungstag der Anmeldung: 05.08.2020
(73) Patentinhaber: BEDA Oxygentechnik Armaturen GmbH, 40885 Ratingen (DE)
(72) Erfinder: Bayer, Reinhardt, 47269 Duisburg (DE)
(74) Vertreter: Schulte & Schulte

(56) Entgegenhaltungen:
- WO-A1-94/27069
- DE-B1- 2 447 723
- US-B1- 6 171 545

## Beschreibung

Die Erfindung betrifft eine Anzeigevorrichtung zur Anzeige von Gefahrensituationen für gasführende Leitungen, die in die Leitung, vor allem Sauerstoffgasrohre integriert und bei Gefahr der Entzündung des Sauerstoffgases die Sauerstoffgasrohre sperrend ausgebildet und mit einem Wärmefühler und einem darüber gegen eine Erstrückstellfeder initiierbaren Ausgangsventil und einem bei Gasausfall sperrenden Eingangsventil ausgerüstet ist, wobei das Ausgangsventil eine Schüsselform aufweist, deren Schüsselrand sich an einer Trennwand einen Hohlraum bildend abstützend ausgeführt und mit deren Schüsselrücken der Wärmefühler über einen Stempel verbunden ist und wobei das Eingangsventil auf der anderen Seite der Trennwand angeordnet und über den Gasdruck des Sauerstoffgases gegen die Rückstellkraft einer Zweitrückstellfeder öffnend ausgebildet ist.

Aus der DE 24 47 723 B1 und der US6171545 ist eine Vorrichtung bekannt, über die in Gefahrensituationen die Gaszuführungsleitung vor der Sauerstofflanze verschlossen wird und die in die Leitung, vor allem Sauerstoffgasrohre integriert und bei Gefahr der Entzündung des Sauerstoffgases die Sauerstoffrohre sperrend ausgebildet und mit einem Wärmefühler und einem darüber gegen eine Erstrückstellfeder initiierbaren Ausgangsventil und einem bei Gasausfall sperrenden Eingangsventil ausgerüstet ist, wobei das Ausgangsventil eine Schüsselform aufweist, deren Schüsselrand sich an einer Trennwand einen Hohlraum bildend abstützend ausgeführt und mit deren Schüsselrücken der Wärmefühler über einen Stempel verbunden ist und wobei das Eingangsventil auf der anderen Seite der Trennwand angeordnet und über den Gasdruck des Sauerstoffgases gegen die Rückstellkraft einer Zweitrückstellfeder öffnend ausgebildet ist. Aus der WO 94/27069 A1 ist ein Ventil mit einem Ventil-Stellungsanzeiger bekannt, der durch das Verschlusssystem des Ventils aktiviert und selbst von einer Hydraulikgruppe manipuliert wird. Nicht eine Anzeigevorrichtung, aber eine Schlackenrücklaufsicherung ist aus der DE 199 03 473 A1 bekannt. Diese Schlackenrücklaufsicherung ist, wie beschrieben, mit einem Doppelventil ausgerüstet, nämlich einmal dem Eingangsventil und zum anderen dem Ausgangsventil, wobei das Ausgangsventil dann anspricht, wenn eine Gefahrensituation eintritt, wobei es sich i.d.R. um den Rückfluss von glühender Schlacke handelt, die durch das Sauerstoffgas führende Lanzenrohr in den Lanzenhalter und damit in einen Bereich zurückfließt, wo eine Gefährdung von Mitarbeitern zu befürchten ist. Ein aufmerksamer Mitarbeiter bemerkt diese Gefahrensituation, zumal ja der Gasstrom durch das geschlossene Eingangsventil abgesperrt ist. Bei einem weniger aufmerksamen Mitarbeiter kann es dann aber doch zu gefährlichen Situationen kommen, weil ihm ja nicht in irgendeiner Weise sichtbar gemacht ist, dass eine solche Gefahrensituation besteht.

Der Erfindung liegt daher die Aufgabe zugrunde, ein in gasführende Leitungen einzusetzendes Sicherungsventil mit einer Anzeigevorrichtung zu schaffen, die das Ansprechen des Sicherungsventils deutlich anzeigt.

Die Aufgabe wird erfindungsgemäß dadurch gelöst, dass die Wandung der Sauerstoffgasleitung im Bereich des Ausgangsventils mindestens eine Durchgangsbohrung aufweist, in der ein Stift verschiebbar gelagert ist und deren unter dem Stift liegender Öffnungsteil bei Ansprechen des Wärmefühlers durch Schließen des Ausgangsventils mit dem dann unter Restdruck des Sauerstoffgases stehenden Hohlraum in Verbindung gebracht ist, wobei das schüsselartige Ausgangsventil bodenseitig einen als auf dem Stempel endseitig aufsitzende, ein Durchschieben des Stempels über die vorgespannte Erstrückstellfeder des Ausgangsventils verhindernde, wärmeunstabile Kappe ausgebildeten Wärmefühler aufweist, der am freien Ende des Stempels angeordnet ist und der im Auslösefall zerstörbar ausgebildet ist.

Bei einer derartigen Lösung der Aufgabe wird auf sehr einfache Art und Weise für den Mitarbeiter unübersehbar angezeigt, dass das Ausgangsventil beispielsweise der Schlackenrücklaufsicherung angesprochen hat. Dadurch, dass mit dem Verschieben des Ausgangsventils, also dem Schließen, der Öffnungsteil unterhalb des Stiftes mit dem unter Restdruck des Sauerstoffgases stehenden Hohlraum verbunden wird, kann dieser gegenüber dem Stift wirksam werden, d.h. kann der Stift durch den Gasdruck so verschoben werden, dass der Bedienende diesen Stift sofort zur Kenntnis nehmen muss, da die Schlackenrücklaufsicherung mit den beiden Ventilen ja direkt am Lanzenhalter angeschlossen ist. Bei Ansprechen des Ausgangsventils wird die Wirkung der Rückstellfeder durch den Druck des Eingangsgases unterstützt und das Ausgangsventil schließt quasi in die Schließstellung. Damit fährt der Stift aus und die Gefährdungssituation wird dem Mitarbeiter angezeigt. Der schon mehrfach erwähnte Wärmefühler spricht an, wenn eine gewisse Temperatur überschritten wird. Dann schiebt sich der Stempel durch und das Ausgangsventil schließt. Um diesen Vorgang genau einstellen zu können und das Einschalten der Anzeigevorrichtung zu unterstützen, weist das schüsselartige Ausgangsventil bodenseitig einen Stempel auf, der im Auslösefall zerstörbar ist, sodass das Ausgangsventil über die zugeordnete Feder sofort in den Dichtsitz gedrückt wird. Der Wärmefühler ist wie beschrieben so aufgebaut, dass er im Normalbetrieb ein Durchschieben des Stempels über die vorgespannte Erstrückstellfeder verhindert. Bei auftretender Wärme kann die wärmeunstabile Kappe, d. h. kann der Wärmefühler, den Stempel nicht mehr halten, sodass sich dieser das Ausgangsventil schließend durchschiebt. Mit dem Begriff wärmeunstabil soll zum Ausdruck gebracht werden, dass die Kappe bei vorgegebener Temperatur schmilzt und damit die Bewegung des Stempels ermöglicht.

Um zu verhindern, dass sich das unter hohem Restdruck stehende Sauerstoffgas am Stift vorbeischleicht, sieht die Erfindung vor, dass der Stift am unteren, dem Hohlraum zugewandten Ende eine Dichtung aufweist. Diese Dichtung ist so angebracht und so ausgebildet, dass sie zwar abdichtet, das Bewegen des Stiftes aber nur unwesentlich beeinflusst.

Um zu erreichen, dass der Mitarbeiter, der eine Lanze beispielsweise bedient, sofort von der Anzeigevorrichtung gewarnt wird, ist der Stift über den Eingangsdruck in eine Position schiebbar ausgebildet, die einem deutlichen Überstand über die Außenseite des Sauerstoffgasrohres entsprechend eingestellt ist. Im Normalbetrieb ist der Stift ja so positioniert, dass er praktisch in der Wandung des Gehäuses sitzt und vom Bedienenden gar nicht bemerkt wird. Spricht das Ausgangsventil aber an, bzw. der Wärmefühler, wird über das Eingangsgas der Stift so weit herausgeschoben, dass er gar nicht übersehen werden kann.

Will man die Warnung für die Mitarbeiter noch weiter positiv beeinflussen, so ist die Möglichkeit gegeben, dass der Stift eine Signalanlage beeinflussend ausgebildet und angeordnet ist. Beispielsweise kann der Stift gegen einen Taster fahren, der eine Signalanlage anspringen lässt. Diese Signalanlage kann optisch und/oder akustisch sein.

Eine weitere Möglichkeit der Erhöhung des Warneffektes ist die, dass der Stift am aus der Durchgangsbohrung herausschiebbaren Ende mit einer Signallampe bestückt ist, die nach Erreichen eines vorgegebenen Überstandes über die Außenseite des Sauerstoffgasrohres einschaltend ausgebildet ist. Bei der Signallampe kann es sich beispielsweise um eine blinkende Lampe handeln, die, wie weiter oben beschrieben, durch den Stift eingeschaltet wird.

Will man auch die Akustik noch berücksichtigen, so ist es vorteilhaft, wenn der Stift eine Pfeife aufweist, die nach dem Ausfahren des Stiftes mit dem Hohlraum zwischen Trennwand und Schüsselinnenraum verbunden ist. Hier macht man sich zunutze, dass der im Hohlraum, also im Schüsselinnenraum anstehende Eingangsdruck ein sehr hoher Druck ist. Dies nutzt man gemäß der Erfindung dazu aus, dass dem Gas nach dem Erreichen der Endposition des Stiftes die Möglichkeit gegeben wird, durch die Pfeife auszuströmen.

Das Schließen des Ausgangsventils wird durch die Erstrückstellfeder bewirkt zusammen mit dem Gasdruck im Hohlraum, wobei erfindungsgemäß ein sicheres Anspringen der Erstrückstellfeder dadurch gesichert ist, dass das Schließen des Ausgangsventils im Gefahrenfall durch die Erstrückstellfeder bewirkt ist, die sich an der Trennwand und im Schüsselinnenraum abstützend angeordnet ist. Damit ist die Erstrückstellfeder in einem "geschlossenen" Raum untergebracht, das Gas kann die Feder nicht umspülen und Turbulenzen hervorrufen. So ist immer sichergestellt, dass im Gefahrenfall das Ausgangsventil schnell und sicher geschlossen wird.

Weiter vorne ist erwähnt worden, dass die erfindungsgemäße Vorrichtung mit einem Lanzenhalter zusammenarbeitet. Ergänzend sieht die Erfindung vor, dass das Ausgangsventil mit Stift und das auf der anderen Seite der Trennwand angeordnete Eingangsventil in einem Ventilgehäuse untergebracht sind, das an ein Lanzenhaltergehäuse für Sauerstoff führende Lanzenrohre ankoppelbar ist, dessen Spannhülse über einen Kniehebel gelenkig über einen Handhebel verbunden und auf eine Druckhülse einwirkend geformt ist, die dabei über die Spannhülse Spannkugeln auf ein eingeschobenes Lanzenrohr pressend angeordnet und ausgebildet ist, wobei mit dem Verschieben von Spannhülse und der Druckhülse auch das fixierte Lanzenrohr dabei ein Absperrventil öffnend und den Gasfluss durch das Absperrventil und die Anzeigevorrichtung freigebend und mit dem eventuellen Gefahrenherd verbindend zu verschieben ist. Das Lanzenrohr wird mit einem derartigen Lanzhalter in den flüssigen Stahl gehalten oder eingeführt, um das ausströmende Sauerstoffgas gezielt in den flüssigen Stahl hineinleiten zu können. Hierbei kann es zu Problemen kommen, weil auf dem flüssigen Stahl aufschwimmende flüssige Schlacke in das Lanzenrohr hineinströmen und bis in den Lanzenhalter gelangen kann. Gefahren werden hierbei durch die erfindungsgemäße Anzeigevorrichtung verhindert, da die Anzeigevorrichtung frühzeitig initiiert wird, d.h. das Ausgangsventil wird geschlossen und der damit in Verbindung stehende Stift bzw. die Stifte werden nach außen gedrückt, so dass sie von dem Bedienenden nicht übersehen werden können. Er sieht sofort die Gefahr und kann entsprechend handeln.

Die Erfindung zeichnet sich insbesondere dadurch aus, dass auf sehr einfache und immer sichere Art und Weise das Ansprechen des Ausgangsventils von außen erkennbar ist. Dies erfolgt automatisch, d.h. es bedarf keiner weiteren elektrischen oder elektronischen Maßnahmen, weil die Erfindung sich den im Ausgangsventil anstehenden Gasdruck zunutze macht, um die Stifte auszufahren, wobei diese dann mit weiteren Warneinrichtungen verbunden werden können, wenn die Stifte nicht sofort deutlich wahrgenommen werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist.

Es zeigen:
- Figur 1:: einen Schnitt durch die Anzeigevorrichtung mit den beiden Ventilen,
- Figur 2:: die Anzeigevorrichtung mit geschlossenem Eingangsventil und geöffnetem Ausgangsventil,
- Figur 3:: die Anzeigevorrichtung mit geöffnetem Eingangs- und geöffnetem Ausgangsventil,
- Figur 4:: die Anzeigevorrichtung mit durch das Schließen des Ausgangsventils bewirktem Einsatz der Anzeigevorrichtung und
- Figur 5:: eine Anzeigevorrichtung in Kombination mit einem Lanzenhalter.

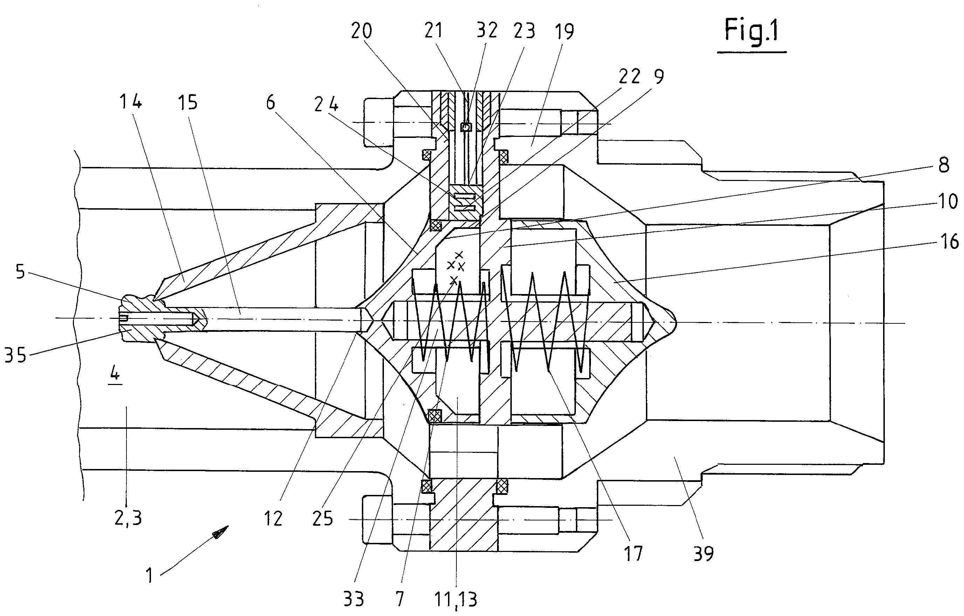

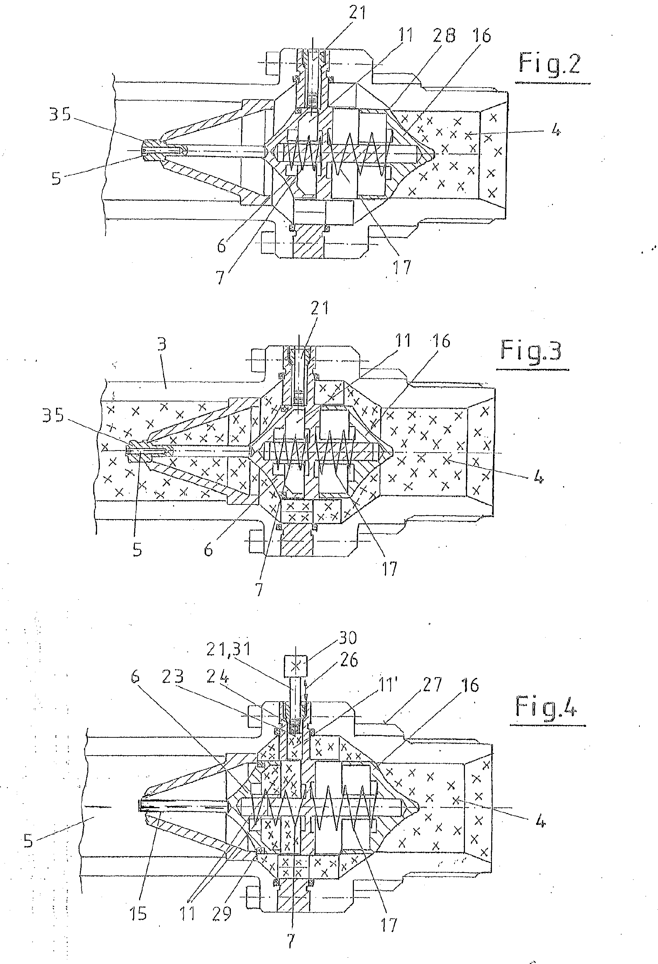

Figur 1 zeigt also eine Anzeigevorrichtung 1, die in eine Schlackenrücklaufsicherung integriert ist. Die Leitung 2 führt ein Sauerstoffgas und wird daher auch als Sauerstoffgasrohr 3 bezeichnet. Das Sauerstoffgas ist bei den weiteren Figuren 2, 3 und 4 durch Kreuzchen gekennzeichnet und trägt zusätzlich das Bezugszeichen 4.

Die Schlackenrücklaufsicherung verfügt über ein Ausgangsventil 6 und ein Eingangsventil 16. Das Ausgangsventil 5 ist eine Schüssel 8 bildend ausgeführt und liegt mit dem Schüsselrand 9 an einer Trennwand 10 an, die das Ausgangsventil 6 vom Eingangsventil 16 trennt. In der gezeigten Situation ist das Ausgangsventil 6 geöffnet, ebenso wie das Eingangsventil 16. Das Ausgangsventil 6 ist gegen die Kraft der Erstrückstellfeder 7 in diese Offenstellung gebracht worden und der Wärmefühler 5 mit seiner wärmeunstabilen Kappe 35 sorgt dafür, dass das Ausgangsventil 6 in dieser Position verbleibt.

Die Schüssel 8 des Ausgangsventils 6 bildet durch diese Ausbildung mit der Trennwand 10 einen Hohlraum 11. Die Schüssel 8 ist über einen Stempel 15 mit dem Wärmefühler 5 verbunden, wobei die aufsitzende Kappe 35 dafür sorgt, dass das Ausgangsventil 6 nicht öffnet. Hierzu ist die Kappe 35 mit der Halterung 14 verbunden. Schmilzt die Kappe 35, so kann nun die Erstrückstellfeder 7 dafür sorgen, dass der Stempel 15 durch die Halterung 14 hindurchgeschoben und das Ausgangsventil 6 in seine Schließstellung hineingeführt wird. Der Stempel 15 stützt sich am Schüsselrücken 12 ab, während die Erstrückstellfeder 7 sich im Schüsselinnenraum 13 befindet, also dem Hohlraum 11. Insbesondere die wichtige Erstrückstellfeder 7 befindet sich damit im Normalbetrieb in einem vom vorbeifließenden Sauerstoffgas unbeeinflussten Bereich. Das Eingangsventil 16 ist durch den hier nicht gekennzeichneten Gasstrom, also das Sauerstoffgas 4 aus seinem Dichtsitz herausgedrückt, wobei die Zweitrückstellfeder 17 entsprechend unter Druck gesetzt ist. Wird das Sauerstoffgas 4 nicht mehr weiter durch die Leitung 2 bzw. das Sauerstoffgasrohr 3 befördert, schließt das Eingangsventil 16 durch die Zweitrückstellfeder 17 beeinflusst in die Schließstellung.

Im Bereich des Hohlraums 11, von diesem durch den Schüsselrand 9 getrennt, ist eine Durchgangsbohrung 20 durch die Wandung 19 hergestellt worden, in der ein Stift 21 verschieblich geführt ist. Am Öffnungsteil 22 des Stiftes 21 ist eine Dichtung 24 vorgesehen, i.d.R. ein oder zwei O-Ringe. Das obere Ende 23 endet mit der Außenseite der Wandung 19. Tritt nun der Fall ein, dass die Kappe 35 durch Hitzeeinwirkung abschmilzt und der Stempel 15 und damit die gesamte Schüssel 8 und damit auch das Ausgangsventil 6 in Richtung der Kappe 35 verschoben werden, wird der Hohlraum 11 mit dem gasführenden Raum verbunden, Gas strömt in den Hohlraum 11 ein und der Stift 21 wird aus seiner Position verschoben, bis er einen vorgegebenen Überstand 26 über die Außenseite 27 des Sauerstoffgasrohres 3 erreicht hat. Angedeutet ist hier, dass im Stift 21 eine Pfeife 32 vorhanden ist, die anspricht, wenn der Stift 21 mit dem unter Restgas 25 stehenden Hohlraum 11 in Verbindung kommt.

Um die Bewegung des Ausgangsventils 6 im Ansprechfall zu vergleichmäßigen, ist die Erstrückstellfeder 7 auf einem Stempel 33 angeordnet. Da die Zufuhr von Gas durch Bedienen eines Schließventils gestoppt ist, behält das Eingangsgas 25 genügend Druck, um die Stifte 21 in der Warnposition zu halten.

Bei Figur 2 ist durch die Kreuze das Sauerstoffgas 4 zusätzlich gekennzeichnet. Bei der in Figur 2 gezeigten Arbeitsposition ist das Eingangsventil 16 geschlossen, d.h. es dichtet gegen die Kante 28 wirksam ab. Das Ausgangsventil 6 ist in der Offenstellung gezeigt. Der Stift 21 kann so nicht in den Hohlraum 11 hineinrutschen, weil er sich auf dem Schüsselrand 9 abstützt. Andererseits ist durch die Dichtung 24 sichergestellt, dass er auch nicht über die Außenseite 27 des Sauerstoffgasrohres 3 sich hinausbewegen kann. Die Zweitrückstellfeder 17 ist entlastet, während die Erstrückstellfeder 7 sich in der gespannten Position befindet. Die Kappe 35 des Wärmefühlers 5 sorgt dafür, dass das Ausgangsventil 6 sich nicht in die Geschlossenposition bewegen kann. Es steht zwar in Figur 2 noch überall Gas an, allerdings kann es nicht strömen, weil das Eingangsventil 16 geschlossen ist.

Dies ändert sich gemäß Figur 3, wenn das Eingangsventil 16 durch den Gasdruck geöffnet wird. Das Sauerstoffgas 4 kann nun am Eingangsventil 16 vorbei durch entsprechende Kanäle und Öffnungsbereiche am Ausgangsventil 6 vorbei in den abführenden Teil des Sauerstoffgasrohres 3 strömen.

Tritt nun der Gefahrenfall ein, d.h. die Kappe 35 schmilzt weg, wie in Figur 4 gezeigt, kann die Erstrückstellfeder 7 das Ausgangsventil 6 bzw. die Schüssel 8 in die Schließstellung bringen. In Figur 3 ist eine Dichtung am Außenrand der Schüssel 8 angedeutet, an die sich die Dichtkante 29 anlegt und dafür sorgt, dass kein Sauerstoffgas mehr in den abführenden Bereich des Sauerstoffgasrohres 3 gelangen kann.

Durch das Bewegen der Schüssel 8 entfernt sich der Schüsselrand 9 von der Trennwand 10, so dass nun das noch anstehende Sauerstoffgas 4 in den Hohlraum 11 zwischen Trennwand 10 und Schüsselinnenraum 13 einströmen kann. Damit steht nun auch das unter hohem Eingangsdruck stehende Eingangsgas 25 unter dem Stift 21, so dass der aus seiner Position in die Anzeigeposition geschoben wird, d.h. das herausschiebbare Ende 31 des Stiftes 21 erreicht die in Figur 4 gezeigte Endposition. Dabei kann der Stift 21 gleichzeitig dazu benutzt werden, eine darüber angeordnete Signalanlage 30 einzuschalten, die zusätzlich zur Wandung des Stiftes 21 auch optisch und/oder akustisch auf die Gefahrensituation aufmerksam macht.

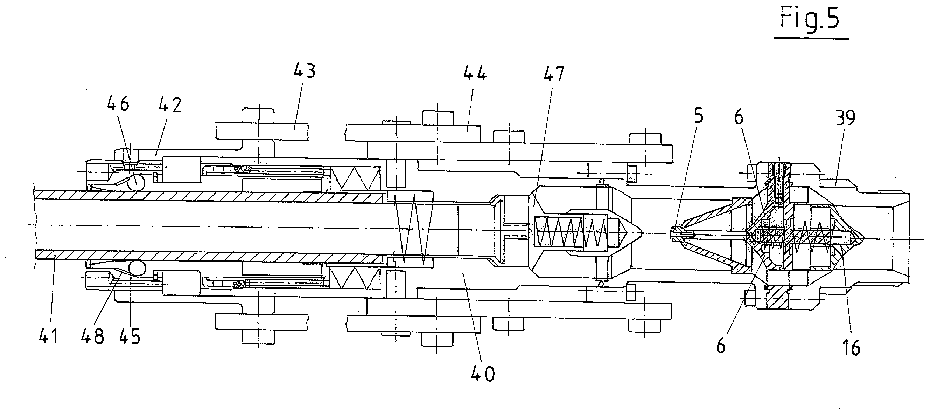

Figur 5 zeigt ein Lanzenhaltergehäuse 40, an das das Ventilgehäuse 39 der Anzeigevorrichtung 1 angeschraubt ist. Hier ist die Position gezeigt, wo das Ausgangsventil 6 nicht angesprochen hat. Das Eingangsventil 16 dagegen ist geschlossen. Geschlossen ist auch das Absperrventil 47, das zwischen dem Ventilgehäuse 39 und dem eigentlichen Lanzenhalter angeordnet ist, allerdings im Lanzenhaltergehäuse 40. In das Lanzenhaltergehäuse 40 eingeschoben ist ein Lanzenrohr 41, das über die Spannhülse 42 und die Druckhülse 45 mit Spannkugeln 46 so weit fixiert ist, dass es beim Weiterbetätigen von Hebel 43 bzw. Handhebel 44 so verschoben wird, dass damit das Absperrventil 47 geöffnet wird. Die Spannkugeln 46 werden durch die Schräge 48 so gegen die Wandung des Lanzenrohres 41 angedrückt, dass das gemeinsame Verschieben sichergestellt ist.

Die Ansprüche und die Beschreibung sind auf Sauerstoff führende Rohre 3 und eine dafür eingesetzte Anzeigevorrichtung 1 ausgerichtet. Genauso ausgebildete Anzeigevorrichtungen 1 können auch für Brenngase oder Erdgas führende Rohre eingesetzt werden.

Alle genannten Merkmale, auch die den Zeichnungen allein zu entnehmenden, werden allein und in Kombination als erfindungswesentlich angesehen.

## Patentansprüche

1. Anzeigevorrichtung zur Anzeige von Gefahrensituationen für gasführende Leitungen (2), die in die Leitung (2), vor allem Sauerstoffgasrohre (3) integriert und bei Gefahr der Entzündung des Sauerstoffgases (4) die Sauerstoffgasrohre (3) sperrend ausgebildet und mit einem Wärmefühler (5) und einem darüber gegen eine Erstrückstellfeder (7) initiierbaren Ausgangsventil (6) und einem bei Gasausfall sperrenden Eingangsventil (16) ausgerüstet ist, wobei das Ausgangsventil (6) eine Schüsselform aufweist, deren Schüsselrand (9) sich an einer Trennwand (10) einen Hohlraum (11) bildend abstützend ausgeführt und mit deren Schüsselrücken (12) der Wärmefühler (5) über einen Stempel (15) verbunden ist und wobei das Eingangsventil (16) auf der anderen Seite der Trennwand (10) angeordnet und über den Gasdruck des Sauerstoffgases (4) gegen die Rückstellkraft einer Zweitrückstellfeder (17) öffnend ausgebildet ist, wobei das schüsselartige Ausgangsventil (6) bodenseitig einen als auf dem Stempel (15) endseitig aufsitzende, ein Durchschieben des Stempels (15) über die vorgespannte Erstrückstellfeder (7) des Ausgangsventils (6) verhindernde, wärmeunstabile Kappe (35) ausgebildeten Wärmefühler (5) aufweist, der am freien Ende (23) des Stempels (15) angeordnet und der im Auslösefall zerstörbar ausgebildet ist.
**dadurch gekennzeichnet,**
**dass** die Wandung (19) des Sauerstoffgasrohres (3) im Bereich des Ausgangsventils (6) mindestens eine Durchgangsbohrung (20) aufweist, in der ein Stift (21) verschiebbar gelagert ist und deren unter dem Stift (21) liegender Öffnungsteil (22) bei Ansprechen des Wärmefühlers (5) durch Schließen des Ausgangsventils (6) mit dem dann unter Restdruck des Sauerstoffgases (4) stehenden Hohlraum (11) in Verbindung gebracht ist.

2. Vorrichtung nach Anspruch 1,
**dadurch gekennzeichnet,**
**dass** der Stift (21) am unteren, dem Hohlraum (11) zugewandten Ende (23) eine Dichtung (24) aufweist.

3. Vorrichtung nach Anspruch1,
**dadurch gekennzeichnet,**
**dass** der Stift (21) über das Restgas (25) in eine Position schiebbar ausgebildet ist, die einem deutlichen Überstand (26) über die Außenseite (27) der Sauerstoffgasleitung (3) entsprechend eingestellt ist.

4. Vorrichtung nach Anpsruch 1,
**dadurch gekennzeichnet,**
**dass** der Stift (21) eine Signalanlage (30) beeinflussend ausgebildet und angeordnet ist.

5. Vorrichtung nach Anspruch 1,
**dadurch gekennzeichnet,**
**dass** der Stift (21) am aus der Durchgangsbohrung (20) herausschiebbaren Ende (31) mit einer Signallampe bestückt ist, die nach Erreichen eines vorgegebenen Überstandes (26) über die Außenseite (27) des Sauerstoffrohres (3) einschaltend ausgebildet ist.

6. Vorrichtung nach Anspruch 1,
**dadurch gekennzeichnet,**
**dass** der Stift (21) eine Pfeife (32) aufweist, die nach dem Ausfahren des Stiftes (21) mit dem Hohlraum (11) zwischen Trennwand (10) und Schüsselinnenraum (13) verbunden ist.

7. Anzeigevorrichtung nach Anspruch 1,
**dadurch gekennzeichnet,**
**dass** das Schließen des Ausgangsventils (6) im Gefahrenfall durch die Erstrückstellfeder (7) bewirkt ist, die sich an der Trennwand (10) und im Schüsselinnenraum (13) abstützend angeordnet ist.

8. Vorrichtung nach Anspruch 1,
**dadurch gekennzeichnet,**
**dass** das Ausgangsventil (6) mit Stift (21) und das auf der anderen Seite der Trennwand (10) angeordnete Eingangsventil (16) in einem Ventilgehäuse (39) untergebracht sind, das an ein Lanzenhaltergehäuse (40) für Sauerstoff führende Lanzenrohre (41) ankoppelbar ist, dessen Spannhülse (42) über einen Kniehebel (43) gelenkig über einen Handhebel (44) verbunden und auf eine Druckhülse (45) einwirkend geformt ist, die dabei über die Spannhülse (42) Spannkugeln (46) auf ein eingeschobenes Lanzenrohr (41) pressend angeordnet und ausgebildet ist, wobei mit dem Verschieben von Spannhülse (42) und der Druckhülse (45) auch das fixierte Lanzenrohr (41) dabei ein Absperrventil (47) öffnend und den Gasfluss durch das Absperrventil (47) und die Anzeigevorrichtung (1) freigebend und mit dem eventuellen Gefahrenherd verbindend zu verschieben ist.

## Claims

1. Display device for the indication of hazardous situations for gas-carrying pipes (2) that is integrated into the pipe (2), especially oxygen gas pipes (3) and is designed to block the oxygen gas pipes (3) on the risk of ignition of the oxygen (4), having a heat sensor (5) and an outlet valve (6) above this initiated against a first return spring (7) and an input valve (16) that locks in the event of a gas supply failure, whereby the outlet valve (6) has a bowl shape, whose bowl edge (9) is designed to be supported on a partition (10) forming a cavity (11) and whereby the heat sensor (5) is linked to the back of the bowl (12) via a plunger (15) and whereby the input valve (16) is located on the other side of the partition (10) and is designed to open via the gas pressure of the oxygen (4) against the return force of a second return spring (17), whereby the bowl-type outlet valve (6) has on the side of the bottom a heat sensor (5) located at the free end (23) of the plunger (15) and designed to be destructible when triggered, designed as a heat-unstable cap (35) sitting on the end of the plunger (15) that prevents the plunger (15) being pushed through via the pretensioned first return spring (7) of the outlet valve (6),
**characterised in that**
the wall (19) of the oxygen gas pipe (3) has at least one through bore (20) in the area of the outlet valve (6), in which a pin (21) is mounted in a movable manner and whose opening part (22) underneath the pin (21) is brought into connection with the cavity (11), which is then under the residual pressure of the oxygen gas (4) when the heat sensor (5) triggered by closing the outlet valve (6).

2. Device in accordance with claim 1,
**characterised in that**
the pin (21) has a gasket (24) at the bottom end (23) towards the cavity (11).

3. Device in accordance with claim 1,
**characterised in that**
the pin (21) is designed to slide via the residual gas (25) into a position that is set in accordance with a clear projection (26) over the outside (27) of the oxygen pipe (3).

4. Device in accordance with claim 1,
**characterised in that**
the pin (21) is designed and located to influence a signalling system (30).

5. Device in accordance with claim 1,
**characterised in that**
the pin (21) is equipped with a signal lamp on the end (31) that can be slid out of the through bore (20) that is designed to switch on after a preset projection (26) over the outside (27) of the oxygen pipe (3) is reached.

6. Device in accordance with claim 1,
**characterised in that**
the pin (21) has a whistle (32) that is connected to the cavity (11) between the partition (10) and the inside of the bowl (13) after the pin (21) is extended.

7. Display device in accordance with claim 1,
**characterised in that**
the closing of the outlet valve (6) is brought about in case of danger by the first return spring (7), which is located at the partition (10) and in the inside of the bowl (13).

8. Device in accordance with claim 1,
**characterised in that**
the outlet valve (6) with pin (21) and the input valve (16) located on the other side of the partition (10) are located in a valve housing (39) that can be coupled to a lance holder housing (40) for oxygen-carrying lance tubes (41) whose clamping sleeve (42) is connected by a toggle lever (43) via a hinged joint through a hand-operated lever (44) and formed to act on a pressure sleeve (45) that is arranged and designed to press onto an inserted lance pipe (41) via the clamping sleeve (42) clamping spheres (46), whereby with the moving of the clamping sleeve (42) and the pressure sleeve (45) the fixed lance tube (41) is also to be moved to connect with the possible source of danger hereby opening a cut-off valve (47) and releasing the gas flow through the cut-off valve (47) and the display device (1).

## Revendications

1. Dispositif d'affichage destiné à afficher les situations de danger pour des conduites de gaz (2), qui est intégré dans la conduite (2), surtout les tuyaux d'oxygène (3), et est conçu, en cas de danger d'inflammation de l'oxygène (4), de façon à bloquer les tuyaux d'oxygène (3), et est équipé d'une sonde thermique (5) outre une soupape de sortie (6) pouvant être déclenchée contre un premier ressort de rappel (7), et une soupape d'entrée (16) bloquante en cas de panne de gaz, dans lequel la soupape de sortie (6) présente une forme de bol, dont le bord de bol (9) est conçu de manière à s'appuyer sur une paroi de séparation (10) en formant une cavité (11) et à laquelle l'arrière du bol (12) de la sonde thermique (5) est relié par l'intermédiaire d'un tampon (15), et dans lequel la soupape d'entrée (16) est disposée sur l'autre côté de la paroi de séparation (10) et est conçue de façon à s'ouvrir sous l'effet de la pression gazeuse de l'oxygène (4) contre la force de rappel d'un second ressort de rappel (17), dans lequel la soupape de sortie (6) en forme de bol présente du côté du fond une sonde thermique (5) ayant la forme d'un capuchon (35) thermiquement instable reposant sur le tampon (15) du côté de l'extrémité, empêchant une poussée du tampon (15) par le premier ressort de rappel (7) préalablement tendu de la soupape de sortie (6), qui est disposé à l'extrémité libre (23) du tampon (15) et est conçu de façon à pouvoir être détruit en cas de déclenchement,
**caractérisé en ce que**
la paroi (19) du tuyau d'oxygène (3) dans la zone de la soupape de sortie (6) présente au moins un trou traversant (20), dans lequel est suspendue une tige (21) coulissante et dans laquelle la pièce d'ouverture (22) située en dessous de la tige (21) est, en cas de réponse de la sonde de température (5), amenée par fermeture de la soupape de sortie (6) en connexion avec la cavité (11) formée sous l'effet de la pression résiduelle de l'oxygène (4)

2. Dispositif selon la revendication 1,
**caractérisé en ce que**
la tige (21) présente un joint (24) sur l'extrémité inférieure (23) tournée vers la cavité (11).

3. Dispositif selon la revendication 1,
**caractérisé en ce que**
la tige (21) est constituée de façon à pouvoir, par l'intermédiaire du gaz résiduel (25), être poussée dans une position qui est réglée en surplombant nettement (26) par conséquent la face extérieure (27) de la conduite d'oxygène (3).

4. Dispositif selon la revendication 1,
**caractérisé en ce que**
la tige (21) est conçue et disposée de façon à influencer une installation de signalisation (30).

5. Dispositif selon la revendication 1,
**caractérisé en ce que**
la tige (21) est équipée à l'extrémité (31) pouvant être poussée hors du trou traversant (20) d'une lampe de signalisation qui est conçue pour s'activer après qu'un surplomb prescrit (26) a été atteint au-dessus de la face extérieure (27) du tuyau d'oxygène (3).

6. Dispositif selon la revendication 1,
**caractérisé en ce que**
la tige (21) présente une pipe (32), qui est reliée après la sortie de la tige (21) avec la cavité (11) entre la paroi de séparation (10) et l'espace intérieur du bol (13).

7. Dispositif selon la revendication 1,
**caractérisé en ce que**
la fermeture de la soupape de sortie (6) est en cas de danger actionnée par le premier ressort de rappel (7), qui est disposé en s'appuyant sur la paroi de séparation (10) et dans l'espace intérieur du bol (13).

8. Dispositif selon la revendication 1,
**caractérisé en ce que**
la soupape de sortie (6), avec la tige (21) et la soupape d'entrée (16) disposée sur l'autre côté de la paroi de séparation (10), sont logées dans un corps de soupape (39) pouvant être couplé à un boîtier de porte-lance (40) pour tube de lance conduisant de l'oxygène (41), dont la douille de serrage (42) est reliée via un levier basculant (43) de façon articulée par un levier manuel (44) et est formée de façon à agir sur une douille de pression (45), qui est formée et disposée de façon à presser, via la douille de serrage (42), des billes de serrage (46) sur un tube de lance (41) glissé par-dessus, dans lequel, avec le coulissement de la douille de serrage (42) et de la douille de pression (45), le tube de lance (41) fixé peut être également coulissé en réalisant une connexion avec le foyer de danger éventuel en ouvrant à cette occasion une vanne d'arrêt (47) et le flux de gaz par la vanne d'arrêt (47) et le dispositif d'affichage (1).
